(19) Europäisches Patentamt
European Patent Office
Office européen des brevets

(11) **EP 2 330 244 A1**

(12) **EUROPEAN PATENT APPLICATION**
published in accordance with Art. 153(4) EPC

(43) Date of publication:
08.06.2011 Bulletin 2011/23

(51) Int Cl.:
*D06F 33/02* (2006.01)

(21) Application number: 09808071.6

(22) Date of filing: 20.08.2009

(86) International application number:
PCT/JP2009/003972

(87) International publication number:
WO 2010/021135 (25.02.2010 Gazette 2010/08)

(84) Designated Contracting States:
AT BE BG CH CY CZ DE DK EE ES FI FR GB GR
HR HU IE IS IT LI LT LU LV MC MK MT NL NO PL
PT RO SE SI SK SM TR
Designated Extension States:
AL BA RS

(30) Priority: 22.08.2008 JP 2008213760

(71) Applicant: Panasonic Corporation
Kadoma-shi
Osaka 571-8501 (JP)

(72) Inventors:
• Kohso, Hiroshi
c/o Panasonic Corporation
Chuo-ku
Osaka-shi
Osaka 540-6207 (JP)
• Gamo, Ken
c/o Panasonic Corporation
Chuo-ku
Osaka-shi
Osaka 540-6207 (JP)

(74) Representative: Schwabe - Sandmair - Marx
Patentanwälte
Stuntzstraße 16
81677 München (DE)

(54) **WASHING MACHINE**

(57) Provided are unbalanced vibration detection unit (31) for detecting an unbalanced vibration of accommodation tub (13) or unbalanced vibration of cabinet (17); and unbalanced vibration estimation unit (30) for estimating the rotation phase of motor (12) and the magnitude of the unbalanced vibration in accordance with the output of control unit (20) for controlling motor (12), wherein control unit (20) includes fabric disentangling adjustment section (24) which determines a fabric disentangling operation on the basis of the output of at least one of unbalanced vibration detection unit (31) and unbalanced vibration estimation unit (30), thereby reducing unbalanced vibration during a dewatering cycle by reducing a deviation in clothes.

FIG. 1

EP 2 330 244 A1

**Description**

TECHNICAL FIELD

The present invention relates to a washing machine that washes laundry such as clothes.

BACKGROUND ART

Generally, washing machines are largely classified into a pulsator type washing machine that washes clothes by agitating washing water with laundry such as clothes and a drum type washing machine that washes (beat washes) clothes by dropping the clothes. In the pulsator type which is called a vertical type, the clothes to be washed are put into and taken out of the upper side of the washing machine, and the direction of the washing tub is aligned with the vertical direction. On the contrary, in the drum type which is called a horizontal type, the direction of the washing tub is aligned with the horizontal direction. Generally, a drying machine is of a horizontal type.

In the drum type washing machine, when a deviation is present in the distribution of the clothes inside the rotation tub, a large vibration may easily occur when a dewatering operation is performed. There is known a washing machine which detects a deviation in the distribution of the clothes upon starting the dewatering operation so to stop the operation in the event of such a large vibration. For example, it is known that in the recent drum type washing machine, in order to reduce a vibration noise caused by unbalanced laundry during dewatering, a technology which detects the unbalance on the basis of a current during a vector control of a motor is used.

That is, a current flowing to the motor to generate a rotational driving force is detected during the rinse operation and the dewatering operation, and the vector control of the motor is performed on the basis of the detected current. Accordingly, the generated torque is controlled to be optimal in respective modes including the dewatering operation. According to this technology, an abnormal vibration generated during the dewatering operation is detected on the basis of a q-axis current directly reflecting the generated torque of the motor (for example, refer to Patent Document 1).

Further, a technology is known in which a steady rotation is performed at a rotation number equal to or less than a resonance rotation number of a support mechanism system, and unbalance is detected on the basis of a variation in the current at that time. That is, clothes are appropriately distributed in the circumferential direction of the drum, and the drum is rotated at the rotation numbers of 100 rpm and 200 rpm slightly higher than the rotation number at which the gravity force is equal to the centrifugal force acting on the clothes. In this state, the eccentricity amount (unbalance) is detected on the basis of the torque current component of the motor current. When the eccentric amount is equal to or less than a predetermined allowable value, the dewatering cycle is performed while the rotation number is increased (for example, refer to Patent Document 2).

However, in the detection of the unbalance of the known drum type washing machine, the technology disclosed in Patent Document 1 estimates the unbalance by measuring the loss torque caused by the unbalance on the basis of the average value of the motor current. However, in this case, the estimation error is large due to the influence of individual differences in the load.

Further, in the low-speed rotation such as upon starting the dewatering operation, it is difficult to detect the dynamic unbalance. In the drum type washing machine, the vibration of the dynamic unbalance becomes larger than that of the static unbalance at the high-speed rotation such as of the resonance rotation number. In addition, since the characteristics of the vibration in the static unbalance are different in accordance with the characteristics of the support mechanism system and whether the unbalance is present in the front or rear side of the washing tub, it is not possible to highly precisely detect the vibration by using one threshold value.

Furthermore, according to the technology disclosed in Patent Document 2, steady rotation is performed at a rotation number equal to or less than the resonance rotation number, and the unbalance is measured on the basis of a variation in the current at that time. However, in this technology, since the resonance rotation number varies due to the amounts of fabric or individual differences, and the sensitivities of the resonances are different, an estimation error occurs.

Also in this case, the magnitude of the vibration is estimated and detected on the basis of the magnitude of the control current (torque current component) at the steady rotation number lower than the resonance rotation number. However, since the unbalance changes in accordance with an increase in the rotation number, it is not possible to highly precisely estimate the vibration. Further, with respect to the dynamic unbalance since the vibration rapidly increases due to the resonance rotation number of the rotational vibration mode, the load on the motor increases. For this reason, it is not possible to detect the dynamic unbalance at a low-speed rotation number as in the technology described in Patent Document 2.

Prior Art Document

Patent Document

[Patent Document 1] Japanese Patent Unexamined Publication No. 2002-360970
[Patent Document 2] Japanese Patent Unexamined Publication No. 2001-276468

DISCLOSURE OF THE INVENTION

An object of the invention is to reduce an unbalanced vibration during a dewatering cycle by reducing deviation in the clothes in such a manner that the deviations in the amount and position of clothes are estimated and a fabric disentangling operation is performed in accordance with the deviation in the clothes.

The invention includes: a washing tub for rotating clothes; a motor for rotationally driving the washing tub; an accommodation tub for accommodating the washing tub and is elastically supported inside a cabinet by a support portion; a control unit for controlling the motor; an unbalanced vibration detection unit for detecting an unbalanced vibration of the accommodation tub or an unbalanced vibration of the cabinet; and an unbalanced vibration estimation unit for estimating the rotation phase of the motor and the magnitude of the unbalanced vibration in accordance with the output of the control unit, wherein the control unit includes a fabric disentangling adjustment section which determines a fabric disentangling operation on the basis of the output of at least one of the unbalanced vibration detection unit and the unbalanced vibration estimation unit.

With this configuration, it is possible to reduce the deviation in the clothes by performing the fabric disentangling operation in accordance with the deviation in the clothes, and to reduce the unbalanced vibration during the dewatering cycle. Accordingly, it is possible to realize a reduction in noise caused by the vibration, improvement of the dewatering rotation number, and a decrease in the dewatering time.

BRIEF DESCRIPTION OF THE DRAWINGS

Fig. 1 is a block configuration diagram illustrating a control device of a washing machine of a first embodiment of the invention.
Fig. 2 is a schematic configuration diagram illustrating the washing machine of the same embodiment.
Fig. 3 is a sequence diagram illustrating dewatering rotation numbers of the washing machine of the same embodiment.
Fig. 4 is an explanatory diagram illustrating vibration characteristics of the washing machine of the same embodiment.
Fig. 5 is a block diagram illustrating detail of a control unit of the washing machine of the same embodiment.
Fig. 6 is a block configuration diagram illustrating a control device of a washing machine of a second embodiment of the invention.
Fig. 7 is a block diagram illustrating a control device of a washing machine of a third embodiment of the invention.

PREFERRED EMBODIMENTS FOR CARRYING OUT THE INVENTION

Hereinafter, embodiments of the invention will be described with reference to the drawings. It should be noted that the invention is not limited to the embodiments.

FIRST EMBODIMENT

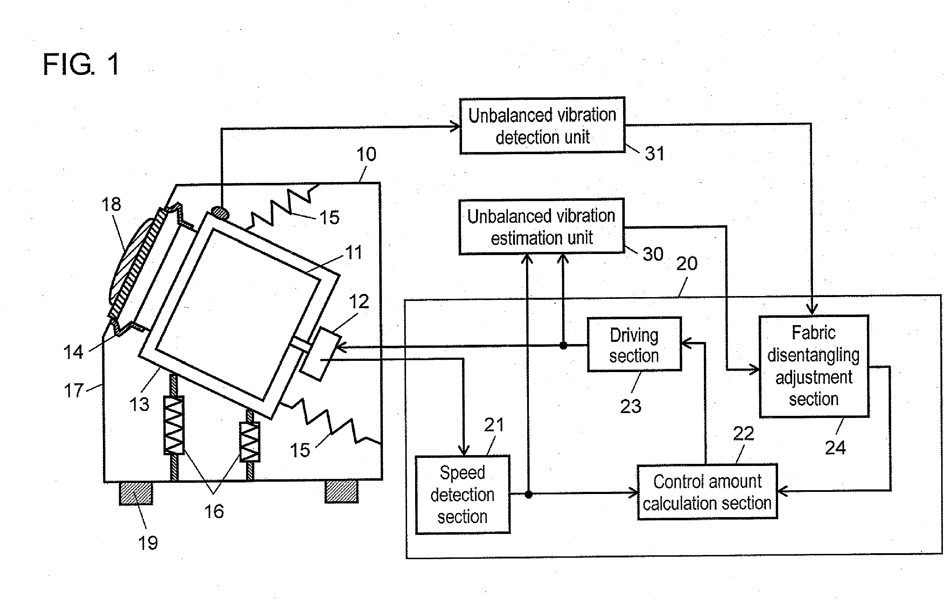

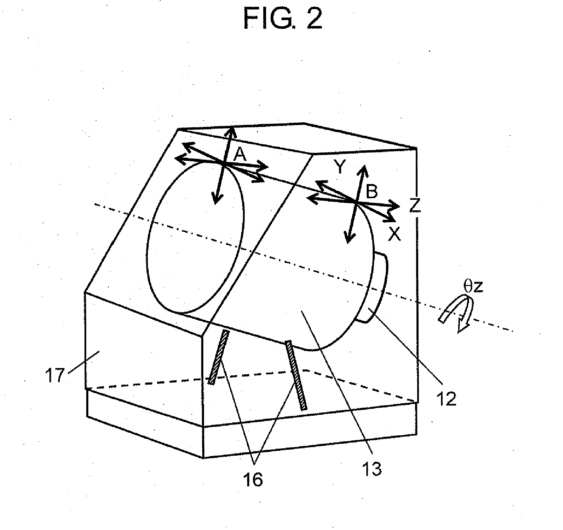

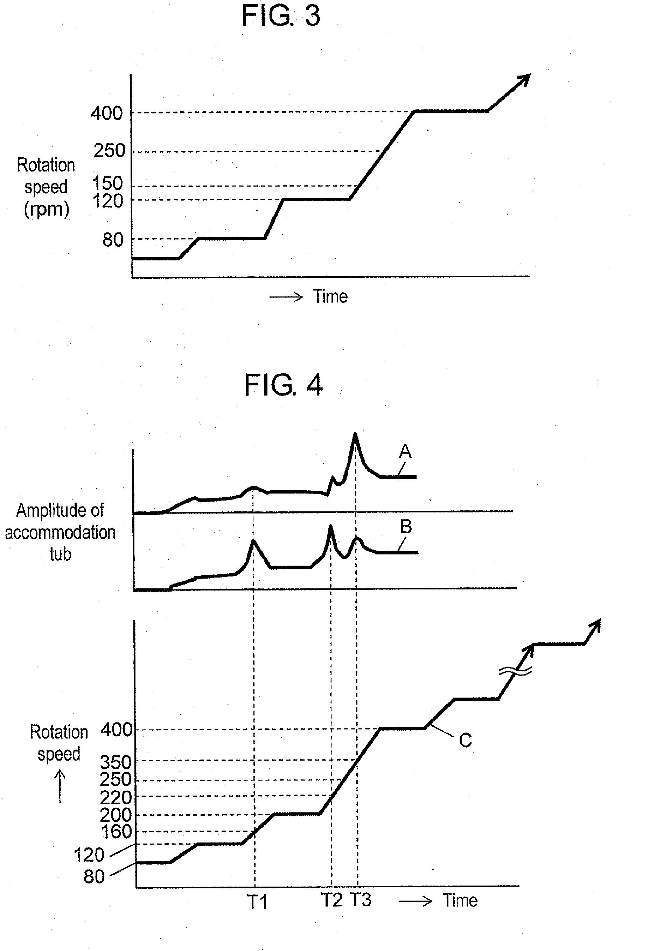

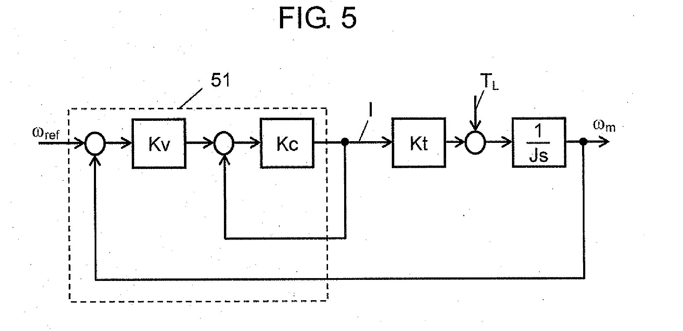

Fig. 1 is a block configuration diagram illustrating a washing machine of a first embodiment of the invention. Fig. 2 is a schematic configuration diagram illustrating the washing machine. Fig. 3 is a sequence diagram illustrating rotation numbers upon activating a dewatering cycle of the washing machine. Fig. 4 is an explanatory diagram illustrating vibration characteristics upon activating the dewatering cycle of the washing machine. Fig. 5 is a block diagram illustrating detail of a control unit of the washing machine.

In Fig. 1, washing machine mechanism unit 10 includes rotation drum 11 which is a washing tub accommodating and rotating laundry such as clothes. Motor 12 rotating rotation drum 11 while controlling the speed thereof includes a brushless motor. Washing machine mechanism unit 10 includes accommodation tub 13 which rotatably accommodates rotation drum 11 therein and into which clothes, as laundry, and water are introduced. Washing machine mechanism unit 10 includes cabinet 17 which accommodates motor 12 and accommodation tub 13 therein. Input opening 18 is provided on the front side of cabinet 17 so as to insert or extract clothes therethrough. Seal packing 14 is provided between accommodation tub 13 and cabinet 17 so as to connect them to each other by removing a gap therebetween. Accommodation tub 13 is supported by support spring 15 so that its forward protrusion attitude is maintained. Damper mechanism 16 includes a spring component and a damper component that reduce vibration generated during the washing cycle (motor rotation cycle) so as to minimize the vibration transmitted to cabinet 17 or the floor. Anti-vibration rubbers 19 are used to install cabinet 17 of washing machine mechanism unit 10 on the floor. Control unit 20 controls the rotation driving of motor 12.

Speed detection section 21 includes a hall IC that detects the rotation speed of motor 12. Control amount calculation section 22 includes a control microcomputer that calculates the control amount by calculating errors with respect to a target rotation speed on the basis of the rotation speed of motor 12 as the output of speed detection section 21. Driving section 23 includes an inverter circuit that applies a motor control current or a motor rotation number to motor 12 on the basis of the control amount calculated by control amount calculation section 22. In the embodiment, a case will be described in which a motor control current is applied to motor 12. Unbalanced vibration estimation unit 30 estimates the unbalanced vibration of rotation drum 11 or cabinet 17, generated by the deviation in the clothes being washed inside rotation drum 11, on the basis of the motor control current or the motor rotation number output from driving section 23. In the embodiment, a case will be described in which the estimation of unbalanced vibration estimation unit 30 is performed on the basis of the motor control current output from driving section 23. Unbalanced vibration detection unit 31 includes, for example, a three-axis acceleration sensor (hereinafter, referred to as a 3D sensor), and directly detects unbalanced vibration. It is to be noted that the estimation of unbalanced vibration estimation unit 30 may be performed on the basis not only of the motor control current output from driving section 23, but also of a variation in the motor rotation number or a variation in the motor control current.

Unbalanced vibration estimation unit 30 estimates the magnitude of unbalanced vibration on the basis of the motor control current or the motor rotation number, and determines the acceleration/stop of motor 12, the acceleration increasing the rotation of motor 12, or the target rotation number in accordance with the magnitude thereof.

Further, unbalanced vibration estimation unit 30 estimates the rotation phase of motor 12. That is, unbalanced vibration estimation unit 30 detects the rotation position of rotation drum 11 at the time when the vibration becomes the largest by tracking the output of unbalanced vibration detection unit 31 for each time period. A fabric disentangling operation to be described later is performed by normally or reversely rotating (rapidly normally or reversely rotating) rotation drum 11 left and right on the basis of the detected rotation position.

Subsequently, a command is transmitted to control amount calculation section 22 via fabric disentangling adjustment section 24 to be described later.

Unbalanced vibration detection unit 31 determines the acceleration/stop of motor 12, the acceleration increasing the rotation of motor 12, or the target rotation number in accordance with the direct detection value of unbalanced vibration of rotation drum 11 or cabinet 17. Subsequently, a command is transmitted to control amount calculation section 22 via fabric disentangling adjustment section 24. Fabric disentangling adjustment section 24 determines a fabric disentangling operation on the basis of the estimation result in unbalanced vibration estimation unit 30 or the detection result in unbalanced vibration detection unit 31 as described below. That is, the reversing operation control of rotation drum 11 is performed so as to perform the fabric disentangling operation.

Out of the value of unbalanced vibration estimation unit 30 and the value of unbalanced vibration detection unit 31, the value of unbalanced vibration detection unit 31 generally has a priority. When there is no output of unbalanced vibration detection unit 31 (a case is also included in which the output is almost zero) or the output signal of unbalanced vibration detection unlit 31 is constant, only the estimation value of unbalanced vibration estimation unit 30 is used for the estimation.

As shown in Fig. 2, in the embodiment, the vibration direction of the drum type washing machine is defined with respect to three axes (X axis, Y axis, and Z axis) perpendicular to each other. The rotation axis of motor 12 is defined as the Z axis, the horizontal direction of accommodation tub 13 when viewed from the front side of the washing machine is defined as the X axis, and the vertical direction thereof is defined as the Y axis. In Fig. 2, the point A indicates the front uppermost end portion of accommodation tub 13, and the point B indicates the rear uppermost end portion of accommodation tub 13. Accordingly, the front vibration of accommodation tub 13 may be detected in the point A, and the rear vibration of accommodation tub 13 may be detected in the point B.

Fig. 3 is a sequence diagram illustrating rotation numbers upon activating the dewatering cycle. The rotation number is increased during the steady rotation having a rotation number from 80 rpm to 120 rpm for a predetermined time, the steady rotation is again performed at 400 rpm passing the resonance rotation number of the support mechanism system of accommodation tub 13, and then high-speed rotation is performed until the dewatering rotation. Further, in the embodiment, the support mechanism system of accommodation tub 13 includes support spring 15 and damper mechanism 16.

Fig. 4 is a diagram illustrating vibration characteristics showing the amplitude of the rear vibration detected in the point B of accommodation tub 13 when the rotation number of motor 12 is increased in accordance with the sequence of Fig. 3. In Fig. 4, the waveforms A and B indicate the amplitude of the vibration of accommodation tub 13. The waveform A indicates dynamic unbalance, and the waveform B indicates static unbalance. The waveform C indicates a variation in time of the rotation number of motor 12, where the rotation number is 160 rpm at the time T1, 220 rpm at the time T2, and 350 rpm at the time T3.

As an example of the static unbalance, there is a case in which 500 g of clothes deviation is present in one side of the front of rotation drum 11 (the point A of Fig. 2). It is to be noted that any one side of the upper or lower side of the front may be acceptable. As an example of the dynamic unbalance, there is a case in which 300 g of clothes deviation is present at the front lower side (the lower side of the point A of Fig. 2) and 300 g of clothes deviation is present at the rear lower side (the lower side of the point B of Fig. 2) facing the front lower side.

As understood from Fig. 4, a large vibration is generated in the vicinity of 350 rpm in the case of the waveform A. Further, a large vibration is generated in the vicinity of 160 rpm and 220 rpm in the case of the waveform B. The vibration of 160 rpm is a resonance generated by coupled a translational vibration mode in the three directions of XYZ. The vibration of 220 rpm is a resonance generated by coupled rotational vibration mode about the X and Y axes. The vibration of 350 rpm is a resonance of a rotational vibration mode about the Z axis. At the time T1, all amplitudes of the X, Y, and Z axes are large with a substantially equal value. At the time T2, the amplitudes in the X and Y axes are larger than that of the Z axis. At the time T3, the amplitude of the axis is larger than the amplitudes of the X and Y axes. Particularly, at the time T2 and the time T3, the amplitudes of the respective axes are different during the dynamic unbalance and the static unbalance. Accordingly, when the type of unbalance (whether the unbalance is dynamic or static) is judged, it is possible to guess the particular axes whose amplitudes to be observed to judge the type of unbalance. In the embodiment, since the center of motor 12, washing tub 11, and accommodation tub 13 is disposed on the rotation axis of washing tub 11 and above rear damper mechanism 16, it is believed that the characteristics shown in Fig. 4 are obtained.

Fig. 5 is a block diagram illustrating detail of a feedback control system of control unit 20 which controls the rotation of motor 12 rotating rotation drum 11. In Fig. 5, in microcomputer 51 which constitutes control amount calculation section 22, the rotation number of motor 12 is controlled with a speed control gain Kv in accordance with a difference between the number of target rotations $\omega$ref and the number of actual rotations $\omega$m, and a target motor driving current is obtained. In accordance with the difference between the target motor driving current and the actual motor driving current output from microcomputer 51, the motor driving current is controlled with a current control gain Kc, and appropriate motor driving current I is obtained. The motor driving current I is used for calculation with a torque constant Kt of motor 12. The result is used for calculation with an inertial moment Js of rotation drum 11 and motor 12, thereby obtaining the rotation number of motor 12. At this time, a torque disturbance TL caused by the unbalance of clothes influences the number of target rotation number $\omega$ref, thereby obtaining the number of actual rotation number $\omega$m.

Here, the vibration detection mechanism will be described. When unbalance of clothes occurs inside rotation drum 11, the rotation of rotation drum 11 by motor 12 becomes an oval rotation. For this reason, when a force generated by the unbalanced vibration is equal to the number of resonance rotation number (the frequency) of the support mechanism system, large vibration is generated. On the other hand, disturbance in the torque direction is applied to motor 12 due to the unbalanced vibration, and a variation in the torque and a variation in the speed occur in the motor control system.

When a variation in the torque caused by the vibration is detected as a variation in the speed, it is obtained by (Equation 1).

$$\omega m/TL = (1/J) / (S + Kv \times Kc \times Kt / (J(1+Kc))) \quad (Equation\ 1)$$

When a variation in the torque caused by the vibration is detected as a variation in the current, it is obtained by (Equation 2).

$$Iq/TL = Kv \times Kc / (J(1+Kc)) / (S + Kv \times Kc \times Kt / (J(1+Kc)))$$

$$(Equation\ 2)$$

For the highly precise detection, the gain may become large in principle. However, when the gain becomes large, the noise of the signal increases. For this reason, the detection precision (variation) has a maximum value in accordance with an increase in the gain. Accordingly, when a variation in torque of motor 12 due to the vibration is detected through parameters of the motor control system, and the vibration is detected by estimation, it is important that the relationship between the vibration and a variation in the torque of motor 12 is linear.

For this reason, the embodiment has the following configuration. First, in the vibration of accommodation tub 13 generated by the unbalance of clothes, the amplitudes of the front vibration in the point A and the rear vibration in the point B shown in Fig. 2 are substantially equal to each other. In the embodiment, since the center of motor 12, washing tub 11, and accommodation tub 13 is disposed on the rotation axis of washing tub 11, and above rear damper mechanism 16, the amplitudes of the front vibration in the point A and the rear vibration in the point B are substantially equal to each other. The rear vibration of accommodation tub 13 brings a variation in the torque of motor 12, and the variation is detected through control parameters. That is, when the relationship between the amplitudes of the front vibration and the rear vibration is not linear, the case in which the front vibration is significantly larger than the rear vibration is erroneously detected in the measurement of a variation in the torque. However, in the embodiment, since the relationship between the amplitudes of the front vibration and the rear vibration is linear, such erroneous detection does not occur.

Second, the resonance mode due to the unbalanced vibration includes a translational mode and a rotation mode in each of the three axes. For this reason, the resonance mode has six vibration modes, and a vibration mode influencing the variation in the torque most is a rotational vibration mode about the Z axis among the six vibration modes. For this reason, in the embodiment, a configuration is employed in which the rotation number (resonance frequency) generating in each vibration mode is not coupled to the rotational vibration mode about the Z axis due to the above-described central position.

Third, in the embodiment, three-coupled translational vibration mode, the coupled rotational vibration mode about the X and Y axes, and the rotational vibration mode about the Z axis are constituted by independent support mechanism systems due to the above-described central position. The magnitudes of resonance rotation number which do not influence a variation in the torque are in the sequence of the translational vibration mode<the rotational vibration mode about the X and Y axes<the rotational vibration mode about the Z axis.

The vibration detection sequence will be described. First, as shown in Fig. 3, a variation in the motor control current is detected during the acceleration state of the cycle in which the rotation number is increased from 80 rpm to 120 rpm. When a static unbalance of clothes occurs during the acceleration, a variation in the torque becomes large in proportion to the magnitude thereof, and the variation in the torque can be detected as a variation in the current. The acceleration is assumed to be rpm/sec.

Here, a variation current value for each rotation is detected to check the variation. When unbalanced vibration estimation unit 30 detects that the variation value is equal to or more than a threshold value during the acceleration, that is, the (static) unbalanced vibration is equal to or more than a threshold value, unbalanced vibration estimation unit 30 commands control unit 20 to stop the rotation of the motor, and performs the dewatering activation operation again after the fabric disentangling operation.

In addition, when the variation in any one of the three directions is equal to or more than a threshold value, the 3D sensor as unbalanced vibration detection unit 31 commands, in the same way as described above, control unit 20 to stop the rotation of the motor, and performs the dewatering activation operation again after the fabric disentangling operation.

Even when the dynamic unbalance occurs in the rotation number, that is, the rotation number from 80 rpm to 120 rpm, almost no vibration occurs, and the variation in the torque is small. For this reason, the unbalanced vibration detection in the translational vibration mode is to perform the static unbalancing detection.

Fabric disentangling adjustment section 24 judges that there is a front unbalance when the vibrations in the horizontal and longitudinal directions are equal to or larger than the vibration in the vertical direction on the basis of the output of the 3D sensor. In addition, when the vibration in the vertical direction is larger than that in the horizontal direction or the longitudinal direction, fabric disentangling adjustment section 24 judges that there is a rear unbalance. On the basis of the result, fabric disentangling adjustment section 24 performs a rapid acceleration/rapid reversing disentangling with less than two rotations in the case of the front unbalance, and performs the rapid acceleration/rapid reversing disentangling with two or more rotations in the case of the rear unbalance.

That is, fabric disentangling adjustment section 24 determines the fabric disentangling operation by detecting the unbalanced vibration from the relationship between the phases and the magnitudes of three signals of the 3D sensor. In addition, fabric disentangling adjustment section 24 may determine the fabric disentangling operation by detecting the unbalanced vibration from the relationship between the rotation number signal and three signals of the 3D sensor or the relationship between the phase and the magnitude of the control current signal.

Subsequently, in a zone where the rotation number reaches 250 rpm from the vicinity of 150 rpm during a cycle in which the rotation number increases from 120 rpm to 400 rpm shown in Fig. 3, unbalanced vibration estimation unit 30 detects a variation in the motor control current in the acceleration state. When the static unbalance of clothes occurs during the acceleration, a variation in the torque becomes large in proportion to the magnitude thereof, and the variation can be detected as a variation in the current.

Also here, a variation current value for each rotation is detected to check the variation. When unbalanced vibration estimation unit 30 detects that the variation value is equal to or more than a threshold value during the acceleration, that is, the (static) unbalanced vibration is equal to or more than a threshold value, unbalanced vibration estimation unit 30 commands control unit 20 to stop the rotation of the motor, and performs the dewatering activation operation again after the fabric disentangling operation.

Here, the detected resonance is a resonance in the rotational vibration modes about the X and Y axes. When there is the static unbalancine, a large vibration and a large variation in torque occur, and they can be highly precisely detected as a variation in the current.

In addition, when the variation in any one of the three directions is equal to or more than a threshold value, the 3D sensor as unbalanced vibration detection unit 30 commands, in the same way as described above, control unit 20 to stop the rotation of the motor, and performs the dewatering activation operation again after the fabric disentangling operation. Also here, since the vibration caused by the static unbalance is larger than the vibration caused by the dynamic unbalance, the detection of the unbalanced vibration in the rotational vibration modes about the X and Y axes is to perform the detection of the static unbalance.

In the same way, fabric disentangling adjustment section 24 judges that there is a front unbalance when the vibrations in the horizontal and longitudinal directions are equal to or larger than the vibration in the vertical direction on the basis of the output of the 3D sensor, and judges that there is a rear unbalance when the vibration in the vertical direction is large. Then, on the basis of the result, fabric disentangling adjustment section 24 performs a rapid acceleration/ rapid reversing disentangling with less than two rotations in the case of the front unbalance, and performs the rapid acceleration/rapid reversing disentangling with two or more rotations in the case of the rear unbalance.

Finally, in a zone where the rotation number reaches 400 rpm from the vicinity of 250 rpm during a cycle in which the rotation number increases from 120 rpm to 400 rpm, a variation in the motor control current is detected in an acceleration state. When the static unbalance of clothes occurs during the acceleration, the variation in the torque becomes large in proportion to the magnitude thereof, and the variation can be detected as a variation in the current.

Also here, a variation current value for each rotation is detected to check the variation. When unbalanced vibration estimation unit 30 detects that the variation value is equal to or more than a threshold value during the acceleration, that is, the dynamic unbalanced vibration is equal to or more than a threshold value, unbalanced vibration estimation unit 30 commands control unit 20 to stop the rotation of the motor, and performs the dewatering activation operation again after the fabric disentangling operation.

Here, the detected resonance is a resonance in the rotational vibration mode about the Z axis (the motor rotation axis). When there is the dynamic unbalance, a large vibration and a large variation in torque occur, and they can be highly precisely detected as a variation in the current.

In addition, when the variation in any one of the three directions is equal to or more than a threshold value, the 3D sensor as unbalanced vibration detection unit 31 commands, in the same way as described above, control unit 20 to stop the rotation of the motor, and performs the dewatering activation operation again after the fabric disentangling operation. Here, since the vibration caused by the dynamic unbalance is larger than the vibration caused by the static unbalance, the detection of the unbalanced vibration in the rotational vibration mode about the Z axis is to perform the detection of the dynamic unbalance. Fabric disentangling adjustment section 24 performs a slow reversing disentangling.

Accordingly, since it is possible to judge whether it is the dynamic unbalance or the static unbalance on the basis of the rotation number at which a resonance occurs, it is possible to separately perform the fabric disentangling operation which is performed when the unbalanced vibration is equal to or more than a threshold value, on the basis of the reasons. That is, when the variation value at the rotation number less than 250 rpm exceeds a threshold value, it is judged to be the static unbalance, and the fabric disentangling operation is performed by the rapid acceleration/rapid reversing. In addition, when the variation value at the rotation number equal to or more than 250 rpm exceeds a threshold value, it is judged to be the dynamic unbalance, and the fabric disentangling operation is performed by the slow reversing.

Also in the case where the rotation number is increased to 400 rpm or more in the high-speed dewatering operation, it is judged in accordance with the type of the unbalance, that is, a dynamic unbalance or static unbalance and the magnitude of the unbalance.

Even when the variation value is equal to or less than a threshold value, if the resonance mode about the Z axis is largest on the basis of the vibration estimation using the variation value, it is judged to be a dynamic unbalance, and the acceleration is slowly performed at 10 rpm/sec, while the high-speed dewatering rotation number is set to 830 rpm. However, when it is judged to be a static unbalance on the basis of the vibration estimation using the variation value, and the acceleration is performed at 15 rpm/sec, while the high-speed dewatering rotation number is set to 900 rpm. Such judgment is performed by unbalanced vibration estimation unit 30.

Further, the maximum rotation number is determined in accordance with the unbalanced state and the vibration state at the time point that the high-speed dewatering rotation is attained. For example, even when the maximum rotation number is 1600 rpm, if the unbalanced state at the high-speed dewatering rotation number is judged to be the dynamic unbalance, the maximum rotation number is set to 1200 rpm, and if the state is judged to be the static unbalance, the maximum rotation number is set to 1300 rpm.

As described above, in the embodiment, fabric disentangling adjustment section 24 performs the fabric disentangling operation in accordance with the determined deviation in clothes on the basis of the output of at least one of unbalanced vibration detection unit 31 and unbalanced vibration estimation unit 30. Accordingly, it is possible to reduce the deviation in clothes, and to reduce the unbalanced vibration during the dewatering cycle. Also, it is possible to realize a reduction in noise caused by the vibration, improvement of the dewatering rotation number, and a decrease in the dewatering time.

SECOND EMBODIMENT

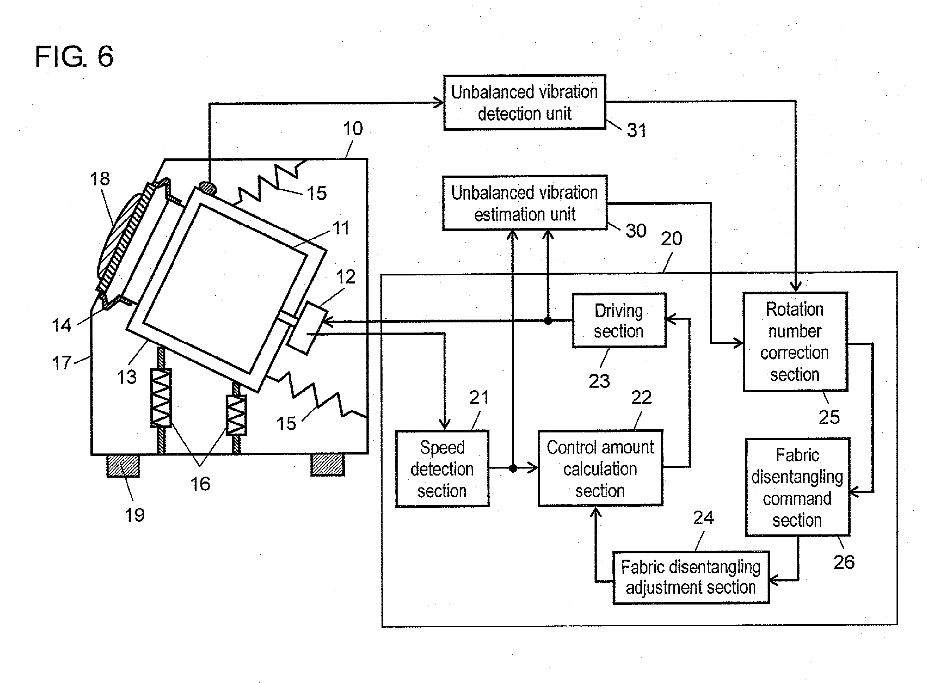

Fig. 6 is a block configuration diagram illustrating a control device of a washing machine of a second embodiment of the invention. In Fig. 6, since the basic configuration is the same as that of the first embodiment, the detailed description of the first embodiment thereof will be cited herein by giving the same reference numeral to the same component.

The embodiment is different from the first embodiment in that control unit 20 includes rotation number correction section 25 that controls the rotation number of motor 12 by decelerating the rotation of the motor without stopping the rotation of motor 12 on the basis of the signal of unbalanced vibration detection unit 31 or unbalanced vibration estimation unit 30. Further, control unit 20 includes fabric disentangling command unit 26 that commands the fabric disentangling operation of fabric disentangling adjustment section 24 by decelerating the rotation of the motor without stopping the rotation thereof by the use of rotation number correction section 25. That is, in the first embodiment, the rotation of motor 12 is once stopped on the basis of the signal of unbalanced vibration detection unit 31 or unbalanced vibration estimation unit 30, and then the fabric disentangling operation is performed, while in the embodiment, the rotation of motor 12 is reduced without stopping the rotation thereof, and then the fabric disentangling operation is performed.

When the 3D sensor as unbalanced vibration detection unit 31 or unbalanced vibration estimation unit 30 judges that the unbalanced vibration amount exceeds a threshold value, rotation number correction section 25 corrects the rotation number so as to reduce the rotation speed at the time of the activation on the basis of the judgment value. The correction is performed so that the rotation is reduced to 45 rpm/min in the case of the static unbalance and is reduced to 60 rpm/min in the case of the dynamic unbalance. The reason why the rotation number is smaller in the static unbalancing is that the normal/reverse rapid reversing operation is to be performed.

Further, after the rotation at the target rotation number (45 rpm/min and 60 rpm/min) is confirmed, fabric disentangling command section 26 commands the fabric disentangling operation in accordance with the unbalanced state. In the case of the low-speed rotation, clothes rotate in a rolling manner in the lower side of washing tub 11 or clothes fall after reached the upper side of washing tub 11. Accordingly, the motor torque changes due to the impact transmitted from the clothes to washing tub 11, and the rotation number of washing tub 11 may not be controlled to be constant. To prevent much situation, the number of repeating disentanglement of clothes is increased or decreased in accordance with a variation in the rotation number. When a variation in the rotation number is large, it is judged that the unbalanced vibration amount is large, and the repetition number is increased. In order to disentangle the clothes, for example, a low-speed rotation is continued for a predetermined time in one direction to make the clothes rotate in a rolling manner or fall after reached the upper side of washing tub 11. Alternatively, the fabric disentangling operation is performed by repeating the normal/reverse rotation operation.

As described above, in the embodiment, the rotation number is determined by rotation number correction section 25 so as to be decreased without stopping the rotation of motor 12. Subsequently, the number of repeating the reverse rotation operation is determined by fabric disentangling command section 26. Accordingly, in the embodiment, the fabric disentangling operation in accordance with the determined deviation in clothes is performed. As a result, it is possible to reduce the deviation in clothes, and to reduce the unbalanced vibration during the dewatering cycle. Furthermore, it is possible to realize a reduction in noise caused by the vibration, improvement of the dewatering rotation number, and a decrease in the dewatering time.

THIRD EMBODIMENT

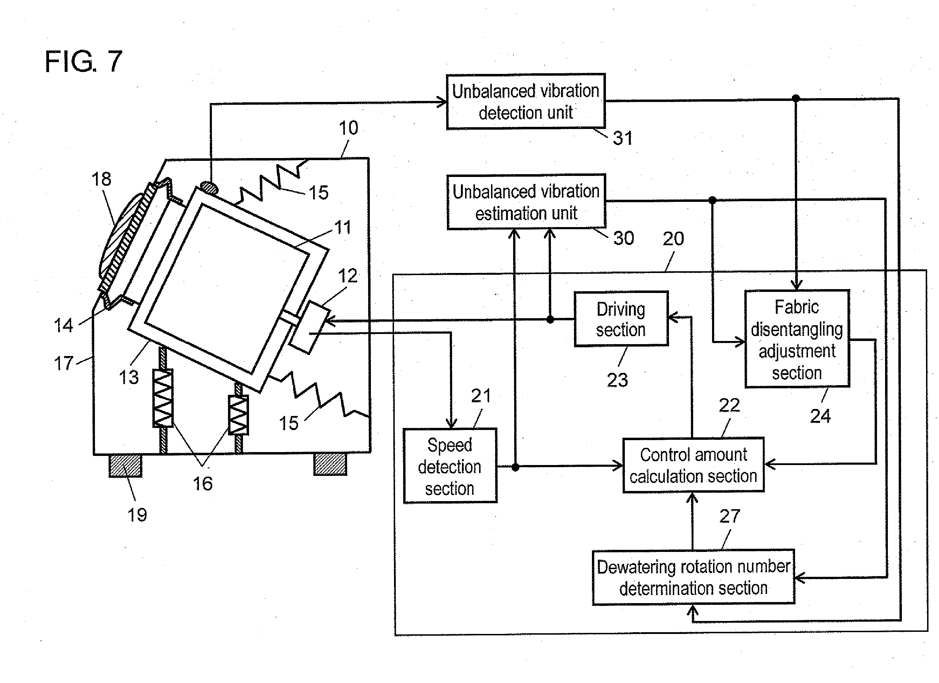

Fig. 7 is a block configuration diagram illustrating a control device of a washing machine of a third embodiment of the invention. In Fig. 7, the basic configuration is the same as that of the first embodiment, and therefore the detailed description of the first embodiment thereof will be cited herein by giving the same reference numeral to the same component.

The embodiment is different from the first embodiment in that dewatering rotation number determination section 27 is provided which controls the dewatering rotation number (in the embodiment, the rotation number after reached 400 rpm) on the basis of the signal of unbalanced vibration detection unit 31 or unbalanced vibration estimation unit 30.

The unbalanced vibration and the unbalanced amount may be detected not only in the steady rotation number zone (in the embodiment, zones of 80, 120, and 400 rpm), but also in the rotation number acceleration zone (in the embodiment, zones of 80 to 120 rpm, and 120 to 400 rpm) on the basis of the signal of unbalanced vibration estimation unit 30 and unbalanced vibration detection unit 31 as a 3D sensor. In the embodiment, the dewatering rotation number is determined on the basis of the result. In Figs. 3 and 4, when the unbalanced amount up to the rotation number of 400 r/min is less than 300 g (regardless of being a static unbalance or dynamic unbalance), acceleration is performed by setting the initial steady rotation number (in the embodiment, 400 rpm) to 1000 r/min. The maximum rotation number is determined after the steady rotation (in the embodiment, 1000 rpm). When the unbalanced amount is equal to or more than 300 g and less than 500 g (regardless of being a dynamic unbalance or dynamic unbalance), acceleration is performed by setting the initial steady rotation number to 900 r/min. In other cases, acceleration is performed by setting the initial steady rotation number to 800 r/min. In this case, the maximum rotation number is set to 1300 rpm and 1200 rpm. The maximum rotation number is determined by judging unbalance after the steady rotation number is decided by judging the unbalance at the initial steady rotation number (400 rpm).

As described above, in the embodiment, the initial steady rotation number and the maximum rotation number is determined by dewatering rotation number determination section 27. Accordingly, it is possible to reduce the unbalanced vibration during the dewatering cycle, and to realize a reduction in noise caused by the vibration, improvement of the dewatering rotation number, and a decrease in the dewatering time. That is, when any unbalance occurs, if the rotation number is increased the magnitude of the vibration increases in proportion to the rotation number. Accordingly, the determination of the dewatering rotation number in accordance with the magnitude of unbalance leads to suppress vibrations.

In the respective embodiments, the unbalanced vibration is estimated in three modes such as three coupled translational vibration mode, the rotational vibration mode about the X and Y axes, and the rotational vibration mode about the motor rotation axis (Z axis). However, the same effect is obtained even when the estimation is performed by using two modes such as a translational vibration mode and a rotational vibration mode about the Z axis or two modes such as a rotational vibration mode about the X axis or the Y axis and a rotational vibration mode about the Z axis.

In the respective embodiments, the three translational vibration modes are coupled, and the rotational vibration modes about the X axis and the Y axis are coupled. However, the same effect is obtained when the rotational vibration mode about the Z axis and the other modes are not coupled.

As described above, the invention includes: a washing tub which rotates clothes; a motor which rotationally drives the washing tub; an accommodation tub which accommodates the washing tub and is elastically supported inside a cabinet by a support portion; a control unit which controls the motor; an unbalanced vibration detection unit which detects an unbalanced vibration of the accommodation tub or an unbalanced vibration of the cabinet; and an unbalanced vibration estimation unit which estimates the rotation phase of the motor and the magnitude of the unbalanced vibration in accordance with the output of the control unit, wherein the control unit includes a fabric disentangling adjustment section which determines a fabric disentangling operation on the basis of the output of at least one of the unbalanced vibration detection unit and the unbalanced vibration estimation unit.

With this configuration, it is possible to reduce the deviation in clothes by performing the fabric disentangling operation in accordance with the deviation in the clothes, and to reduce unbalanced vibration during the dewatering cycle. Accordingly, it is possible to realize a reduction in noise caused by the vibration, improvement of the dewatering rotation number, and a decrease in the dewatering time.

In the invention, the unbalanced vibration estimation unit estimates the magnitude of the unbalanced vibration on the basis of a control current or a rotation number of the motor for each vibration mode of the accommodation tub.

Accordingly, it is possible to reduce the deviation in the clothes by performing the fabric disentangling operation in accordance with the deviation in the clothes. Also, it is possible to reduce the unbalanced vibration during the dewatering cycle, and to realize a reduction in noise caused by the vibration, improvement of the dewatering rotation number, and a decrease in the dewatering time.

In the invention, the control unit includes: a rotation number correction section which controls the rotation number of the motor so as to reduce the rotation speed without stopping the rotation of the motor; and a fabric disentangling command section which commands the adjustment operation of the fabric disentangling adjustment section.

With this configuration, it is possible to perform the fabric disentangling operation in accordance with the deviation in the clothes, and to reduce the deviation in the clothes. Thus, it is possible to reduce the unbalanced vibration during the dewatering cycle, and to realize a reduction in noise caused by the vibration, improvement of the dewatering rotation number, and a decrease in the dewatering time. Further, since the activation current is not needed, the power consumption decreases, thereby realizing energy savings.

In the invention, the unbalanced vibration detection unit includes an acceleration sensor capable of detecting a vibration in three directions, and the fabric disentangling adjustment section determines the fabric disentangling operation by estimating the unbalanced vibration state on the basis of the relationship between the rotation phase of the motor and the magnitudes of three signals in the three directions of the acceleration sensor.

With this configuration, it is possible to estimate the deviation state in the clothes with high precision, and to perform the fabric disentangling operation in accordance with the deviation in the clothes. Accordingly, it is possible to reduce the deviation in the clothes, and to reduce the unbalanced vibration during the dewatering cycle. Further, it is possible to realize a reduction in noise caused by the vibration, improvement of the dewatering rotation number, and a decrease in the dewatering time.

In the invention, the unbalanced vibration detection unit includes an acceleration sensor capable of detecting a vibration in three directions, and the fabric disentangling adjustment section determines the fabric disentangling operation by estimating the unbalanced vibration state on the basis of the relationship between the rotation number signal of the motor and the magnitudes of three signals in the three directions of the acceleration sensor or the relationship between the rotation phase of the motor and the magnitude of the control current signal.

With this configuration, it is possible to highly precisely estimate the deviation in the clothes and the load to the motor, and to perform the fabric disentangling operation in accordance with the deviation in the clothes. Accordingly, it is possible to reduce the deviation in the clothes, and to reduce the unbalanced vibration during the dewatering cycle. Further, it is possible to realize a reduction in noise caused by the vibration, improvement of the dewatering rotation number, and a decrease in the dewatering time.

In the invention, the unbalanced vibration detection unit includes an acceleration sensor capable of detecting a vibration in three directions, and the fabric disentangling adjustment section determines the fabric disentangling operation on the basis of the magnitude of the unbalanced vibration estimated by the unbalanced vibration estimation unit and the magnitudes of three signals in the three directions of the acceleration sensor of the unbalanced vibration detection unit.

With this configuration, it is possible to reduce the unbalanced vibration during the dewatering cycle by reducing the deviation in the clothes, and to realize a reduction in noise caused by the vibration, improvement of the dewatering rotation number, and a decrease in the dewatering time.

In the invention, the fabric disentangling adjustment section determines the fabric disentangling operation only on the basis of the signal of the unbalanced vibration estimation unit when the output of the unbalanced vibration detection unit is constant or almost zero.

With this configuration, it is possible to reduce the unbalanced vibration during the dewatering cycle by reducing the deviation in the clothes, and to realize a reduction in noise caused by the vibration, improvement of the dewatering rotation number, and a decrease in the dewatering time.

In the invention, the unbalanced vibration detection unit detects a vibration in the front side of the accommodation tub.

With this configuration, it is possible to highly precisely detect unbalance even in the case of a small amount of clothes. Accordingly, it is possible to reduce the deviation in the clothes by performing the fabric disentangling operation in accordance with the deviation in the clothes, and to reduce the unbalanced vibration during the dewatering cycle. Further, it is possible to realize a reduction in noise caused by the vibration, improvement of the dewatering rotation number, and a decrease in the dewatering time.

In the invention, the unbalanced vibration estimation unit estimates the magnitude of the unbalanced vibration on the basis of at least one of a variation in the rotation number of the motor, a variation in the control current of the motor, and the control current of the motor.

With this configuration, it is possible to highly precisely estimate the unbalanced vibration, and to reduce the deviation in the clothes by performing the fabric disentangling operation in accordance with the deviation in the clothes. Accordingly, it is possible to reduce the unbalanced vibration during the dewatering cycle, and to realize a reduction in noise caused by the vibration, improvement of the dewatering rotation number, and a decrease in the dewatering time.

In the invention, the control unit includes a dewatering rotation number determination section which determines the dewatering rotation number on the basis of the output of at least one of the unbalanced vibration detection unit and the unbalanced vibration estimation unit.

With this configuration, it is possible to reduce the deviation in the clothes by performing the fabric disentangling operation in accordance with the deviation in the clothes, and to reduce the unbalanced vibration during the dewatering cycle. Accordingly, it is possible to realize a reduction in noise caused by the vibration, improvement of the dewatering rotation number, and a decrease in the dewatering time.

INDUSTRIAL APPLICABILITY

As described above, since the washing machine according to the invention can reduce the unbalanced vibration during the dewatering cycle by reducing the deviation in the clothes, and realize a reduction in noise caused by the vibration, improvement of the dewatering rotation number, and a decrease in the dewatering time, the washing machine of the invention is useful.

DESCRIPTION OF REFERENCE NUMERALS AND SIGNS

10:    washing machine mechanism unit
11:    washing tub
12:    motor
13:    accommodation tub
14:    seal packing
15:    support spring

16: damper mechanism
17: cabinet
18: input opening
19: anti-vibration rubber
20: control unit
21: speed detection section
22: control amount calculation section
23: driving section
24: fabric disentangling adjustment section
25: rotation number correction section
26: fabric disentangling command section
27: dewatering rotation number determination section
30: unbalanced vibration estimation unit
31: unbalanced vibration detection unit

## Claims

1. A washing machine comprising:

   a washing tub for rotating clothes;
   a motor for rotationally driving the washing tub;
   an accommodation tub for accommodating the washing tub and is elastically supported inside a cabinet by a support portion;
   a control unit for controlling the motor;
   an unbalanced vibration detection unit for detecting an unbalanced vibration of the accommodation tub or an unbalanced vibration of the cabinet; and
   an unbalanced vibration estimation unit for estimating a rotation phase of the motor and the magnitude of the unbalanced vibration in accordance with the output of the control unit,
   wherein the control unit includes a fabric disentangling adjustment section which determines a fabric disentangling operation on the basis of output of at least one of the unbalanced vibration detection unit and the unbalanced vibration estimation unit.

2. The washing machine of claim 1, wherein the unbalanced vibration estimation unit estimates the magnitude of the unbalanced vibration on the basis of a control current or a rotation speed of the motor for each vibration mode of the accommodation tub.

3. The washing machine of claim 1, wherein the control unit includes:

   a rotation number correction section which controls the rotation number of the motor so as to reduce rotation speed without stopping the rotation of the motor; and
   a fabric disentangling command section which commands the fabric disentangling operation of the fabric disentangling adjustment section.

4. The washing machine of claim 1,
   wherein the unbalanced vibration detection unit includes an acceleration sensor capable of detecting a vibration in three directions, and
   wherein the fabric disentangling adjustment section determines the fabric disentangling operation by estimating the unbalanced vibration state on the basis of the relationship between the rotation phase of the motor and the magnitudes of three signals in three directions of the acceleration sensor.

5. The washing machine of claim 1,
   wherein the unbalanced vibration detection unit includes an acceleration sensor capable of detecting a vibration in three directions, and
   wherein the fabric disentangling adjustment section determines the fabric disentangling operation by estimating the unbalanced vibration state on the basis of the relationship between the rotation number signal of the motor and the magnitudes of three signals in three directions of the acceleration sensor or the relationship between the rotation phase of the motor and the magnitude of the control current signal.

**6.** The washing machine of claim 1,
wherein the unbalanced vibration detection unit includes an acceleration sensor capable of detecting a vibration in three directions, and
wherein the fabric disentangling adjustment section determines the fabric disentangling operation on the basis of the magnitude of the unbalanced vibration estimated by the unbalanced vibration estimation unit and the magnitudes of three signals in three directions of the acceleration sensor of the unbalanced vibration detection unit.

**7.** The washing machine of claim 1, wherein the fabric disentangling adjustment section determines the fabric disentangling operation only on the basis of the signal of the unbalanced vibration estimation unit when the output of the unbalanced vibration detection unit is constant or almost zero.

**8.** The washing machine of claim 1, wherein the unbalanced vibration detection unit detects a vibration in the front side of the accommodation tub.

**9.** The washing machine of claim 1, wherein the unbalanced vibration estimation unit estimates the magnitude of the unbalanced vibration on the basis of at least one of a variation in the rotation number of the motor, a variation in the control current of the motor, and the control current of the motor.

**10.** The washing machine of claim 1, wherein the control unit includes a dewatering rotation number determination section which determines the dewatering rotation number on the basis of the output of at least one of the unbalanced vibration detection unit and the unbalanced vibration estimation unit.

FIG. 1

EP 2 330 244 A1

# FIG. 2

# FIG. 3

# FIG. 4

## FIG. 5

FIG. 6

FIG. 7

EP 2 330 244 A1

<table>
<tr><td colspan="2" align="center">**INTERNATIONAL SEARCH REPORT**</td><td colspan="2">International application No.<br>PCT/JP2009/003972</td></tr>
</table>

**A. CLASSIFICATION OF SUBJECT MATTER**
*D06F33/02*(2006.01)i

According to International Patent Classification (IPC) or to both national classification and IPC

**B. FIELDS SEARCHED**

Minimum documentation searched (classification system followed by classification symbols)
D06F33/02

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2007-209502 A  (Sanyo Electric Co., Ltd.),<br>23 August 2007 (23.08.2007),<br>paragraphs [0063] to [0075]; fig. 9 to 11<br>(Family: none) | 1-10 |
| Y | JP 2008-183297 A  (Matsushita Electric Industrial Co., Ltd.),<br>14 August 2008 (14.08.2008),<br>paragraphs [0055] to [0057]; fig. 5<br>(Family: none) | 1-10 |
| Y | JP 2006-346270 A  (Toshiba Corp.),<br>28 December 2006 (28.12.2006),<br>paragraph [0018]; fig. 2<br>(Family: none) | 1-10 |

☐ Further documents are listed in the continuation of Box C.    ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>13 November, 2009 (13.11.09) | Date of mailing of the international search report<br>24 November, 2009 (24.11.09) |
|---|---|
| Name and mailing address of the ISA/<br>Japanese Patent Office | Authorized officer |
| Facsimile No. | Telephone No. |

Form PCT/ISA/210 (second sheet) (April 2007)

**REFERENCES CITED IN THE DESCRIPTION**

**Patent documents cited in the description**

- JP 2002360970 A
- JP 2001276468 A